# EUROPÄISCHE PATENTANMELDUNG

(11) **EP 1 967 348 A1**
(43) Veröffentlichungstag der Anmeldung: **10.09.2008**
(21) Anmeldenummer: 08101097.7
(22) Anmeldetag: 30.01.2008
(51) Int. Cl.: B29C 45/68

(54) **Schließeinheit für ein Werkzeug**

(30) Priorität: 08.03.2007 DE 102007011443
(71) Anmelder: Robert Bosch GmbH, 70184 Stuttgart (DE)
(72) Erfinder: Dantlgraber, Jörg, 97816 Lohr am Main (DE)
(74) Vertreter: Thürer, Andreas

(57) **Zusammenfassung**

Offenbart ist eine Schließeinheit für ein Werkzeug mit zwei relativ zueinander beweglichen Schließplatten und einer in einem Zylinder angeordneten Kolbeneinheit zum Aufbringen einer großen Schließkraft, wobei zumindest eine Schließplatte mittels einer elektrisch angetriebenen Spindel axial bewegbar ist. Erfindungsgemäß ist die Kolbeneinheit oder der Zylinder zum Aufbringen der großen Axialkraft über eine Halteeinrichtung mit Bezug zu der beweglichen Schließplatte festlegbar.

## Beschreibung

Die Erfindung betrifft eine Schließeinheit für ein Werkzeug gemäß dem Oberbegriff des Patentanspruchs 1.

In jüngster Zeit geht man dazu über, Spritzgießmaschinen mit elektrischen und hydraulischen Antrieben zu versehen, wobei über den elektrischen Antrieb Stellbewegungen mit hoher Geschwindigkeit bei vergleichsweise geringen Kräften ausgeführt werden, während der hydraulische Antrieb besonders vorteilhaft ist, wenn hohe Axialkräfte bei vergleichsweise geringfügigen Stellbewegungen aufgebracht werden müssen. Derartige Anforderungen treten beispielsweise bei einer Schließeinheit zum Schließen des Werkzeugs einer Kunststoffspritzgießmaschine auf, wobei die bewegliche Schließplatte (Aufspannplatte) zum Schließen des Werkzeugs zunächst über den elektrischen Antrieb schnell bewegt wird und dann zum vollständigen Zufahren und Zuhalten des Werkzeugs mit der erforderlichen hohen Schließkraft nur ein kurzer Resthub mittels der Hydraulik durchfahren wird.

Eine derartige Schließeinheit für eine Spritzgießmaschine ist beispielsweise aus der DE 41 11 594 A1 bekannt. Bei dieser Lösung ist eine bewegliche Schließplatte über einen Hydrozylinder an einer elektrisch betätigten Hubspindelanordnung abgestützt, um schnell schließen und öffnen zu können. Die hohe Schließkraft wird durch Druckbeaufschlagung des mit der Schließplatte verfahrbaren Hydrozylinders hydraulisch aufgebracht. Nachteilig bei derartigen Schließeinheiten ist, dass die gesamte Reaktionskraft über die Hubspindelanordnung aufgenommen und an das Maschinengestell übertragen werden muss.

Aus der DE 103 54 955 A1 ist des Weiteren eine Antriebseinheit mit einem hydraulischen Kraftübersetzer bekannt, dessen Kolbeneinheit über eine elektrisch betätigte Hubspindelanordnung betätigt wird. Die Kolbeneinheit begrenzt gemeinsam mit einem Zwischenteil und einem Kolben einen Druckraum. Bei dieser Lösung ist das Zwischenteil formschlüssig mit dem Gestell der Spitzgießmaschine verriegelbar, so dass die Axialkraft des hydraulischen Kraftübersetzers von dem Maschinengestell aufgenommen wird. Nachteilig bei dieser Lösung ist, dass ein hoher fertigungstechnischer Aufwand zur Herstellung des Zwischenteils erforderlich ist.

Demgegenüber liegt der Erfindung die Aufgabe zugrunde, eine Schließeinheit zu schaffen, bei der hohe Schließkräfte mit minimalem vorrichtungstechnischen Aufwand ermöglicht sind.

Diese Aufgabe wird durch eine Schließeinheit mit den Merkmalen des Patentanspruchs 1 gelöst.

Die erfindungsgemäße Schließeinheit für ein Werkzeug, insbesondere ein Spritzgießwerkzeug, verwendet zwei relativ zueinander bewegliche Schließplatten und eine in einem Zylinder angeordnete Kolbeneinheit zum Aufbringen einer großen Schließkraft, wobei zumindest eine Schließplatte mittels einer elektrisch angetriebenen Spindel axial bewegbar ist. Erfindungsgemäß ist die Kolbeneinheit oder der Zylinder zum Aufbringen der großen Axialkraft über eine Halteeinrichtung mit Bezug zu der beweglichen Schließplatte festlegbar. Dadurch ist gegenüber dem Stand der Technik gemäß der DE 103 54 955 A1 kein Zwischenteil erforderlich, so dass die Herstellung der Schließeinheit wesentlich erleichtert ist.

Gemäß einem besonders bevorzugten Ausführungsbeispiel der Erfindung hat die Halteeinrichtung Eingriffsabschnitte, die formschlüssig in entsprechende Verriegelungsabschnitte eingreifen.

Als besonders vorteilhaft hat es sich erwiesen, wenn die Eingriffs- und Verriegelungsabschnitte eine Verzahnung bilden, die in Radialrichtung in Eingriff bringbar ist.

Vorzugsweise ist die Halteeinrichtung derart ausgebildet, dass die Verriegelung an unterschiedlichen Axialpositionen erfolgen kann.

Die Kolbeneinheit begrenzt bei einem bevorzugten Ausführungsbeispiel der Erfindung mit dem Zylinder zwei Druckräume, die jeweils mit einem Hochdruckspeicher und/oder einem Niederdruckspeicher verbindbar sind.

Gemäß einem besonders bevorzugten Ausführungsbeispiel der Erfindung hat die Schließeinheit einen an der beweglichen Schließplatte parallel zur Spindel festgelegten Holm, der die Kolbeneinheit durchsetzt, wobei die Kolbeneinheit in Radialrichtung in Eingriff mit dem Holm bringbar ist. Die große Schließkraft wird dann im Wesentlichen durch die Kolbeneinheit aufgebracht, wobei die Spindel die Schließbewegung aktiv unterstützen kann.

Bei einer alternativen Variante der Schließeinheit durchsetzt die Spindel die Kolbeneinheit axial. Vorzugsweise ist eine mit der Spindel zusammenwirkende Spindelmutter koaxial zu der Kolbeneinheit angeordnet. Hierbei wird es bevorzugt, wenn der Zylinder mittels der Halteeinrichtung an der beweglichen Schließplatte festlegbar ist.

Bei größeren Maschinen kann, abhängig vom Werkzeug, eine Aufreißkraft zum Öffnen des Werkzeugs notwendig sein, die von der Spindel nicht aufgebracht werden kann. Zum Aufbringen der Aufreißkraft weist die Kolbeneinheit bei diesem Ausführungsbeispiel zwei Kolben mit unterschiedlichen Wirkflächen auf, die jeweils einen Teildruckraum stirnseitig begrenzen. Der Kolben mit größerer Wirkfläche ist vorzugsweise in Richtung einer Anlageposition an den Kolben mit kleinerer Wirkfläche mit Hochdruck oder Niederdruck beaufschlagbar und bildet einen beweglichen Anschlag für den kleinen Kolben aus. Der Kolben mit kleinerer Wirkfläche ist zum Öffnen des Werkzeugs mit Hochdruck beaufschlagbar.

Der zum Spindelantrieb vorgesehene Elektromotor kann mit zumindest einer Pumpe und/oder einem Hydromotor verbunden sein, so dass die Hydrospeicher mittels des Elektromotors befüllbar oder die Bremsenergie des Systems durch Rekuperation in hydraulische und/oder elektrische Energie umwandelbar ist. Dadurch kann der Gesamtwirkungsgrad des Systems verbessert werden.

Sonstige vorteilhafte Weiterbildungen der Erfindung sind Gegenstand weiterer Unteransprüche.

Im Folgenden werden bevorzugte Ausführungsbeispiele der Erfindung anhand schematischer Zeichnungen näher erläutert. Es zeigen:
Figur 1 ein Schaltschema einer Schließeinheit gemäß eines ersten erfindungsgemäßen Ausführungsbeispiels;
Figur 2 ein Schaltschema einer alternativen Variante der Schließeinheit aus Figur 1;
Figur 3 ein Schaltschema einer weiteren Variante der Schließeinheit aus Figur 1;
Figur 4 ein Schaltschema eines erfindungsgemäßen Ausführungsbeispiels einer Schließeinheit mit koaxialer Zylinder/Kolben-Anordnung;
Figur 5 ein weiteres Schaltschema eines erfindungsgemäßen Ausführungsbeispiels einer Schließeinheit mit koaxialer Zylinder/Kolben-Anordnung und
Figur 6 ein Schaltschema einer erfindungsgemäßen Variante einer Schließeinheit mit zwei Kolben.

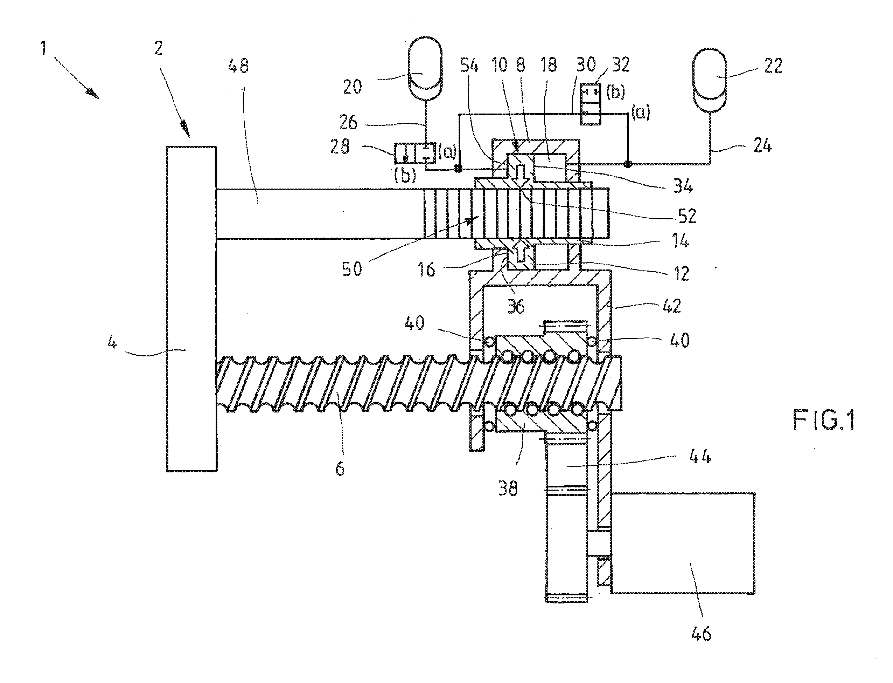

Figur 1 zeigt ein Schaltschema einer erfindungsgemäßen Schließeinheit 1 für ein Werkzeug 2, beispielsweise einer nicht näher dargestellten Zweiplatten-Spritzgießmaschine. Die Schließeinheit 1 hat zwei relativ zueinander bewegliche Schließplatten, von denen lediglich die bewegliche Schließplatte 4 dargestellt ist, die mittels einer elektrisch angetriebenen Spindel 6 axial bewegbar ist. Zum Aufbringen einer großen Schließkraft mittels der Schließplatte 4 ist eine in einem Zylinder 8 angeordnete hydraulische Kolbeneinheit 10 vorgesehen. Die Kolbeneinheit 10 hat einen doppeltwirkenden Kolben 12 mit einer durchgehenden, hohlen Kolbenstange 14, der mit dem Zylinder 8 zwei Druckräume 16, 18 begrenzt. Der gemäß Figur 1 rechte, in Öffnungsrichtung wirksame Druckraum 18 ist über eine Niederdruckleitung 24 mit einem Niederdruckspeicher 22 verbunden. Der linke, in Schließrichtung wirksame Druckraum 16 ist über eine Hochdruckleitung 26 mit einem Hochdruckspeicher 20 verbindbar. In der Hochdruckleitung 26 ist ein 2/2-Wegeventil 28 angeordnet, das in seiner dargestellten Arbeitsposition (a) geschlossen und in seine Öffnungsstellung (b) betätigbar ist. Von der Niederdruckleitung 24 zweigt zwischen dem Niederdruckspeicher 22 und dem Zylinder 8 eine Verbindungsleitung 30 ab, die zwischen dem 2/2-Wegeventil 28 und dem Zylinder 8 in die Hochdruckleitung 26 mündet. In der Verbindungsleitung 30 ist ein 2/2-Wegeventil 32 angeordnet, das in der dargestellten Arbeitsposition (a) offen und in seine Schließstellung (b) bringbar ist. Das heißt, der rechte Druckraum 18 des Zylinders 8 ist über die Niederdruckleitung 24 ständig mit dem Niederdruckspeicher 22 verbunden und kann über das Ventil 32, die Verbindungsleitung 30 und einen Teil der Hochdruckleitung 26 mit dem linken Druckraum 16 verbunden werden. Eine dem rechten Druckraum 18 des Zylinders 8 zugeordnete Ringfläche 34 des Kolbens 12 hat eine gegenüber einer dem linken Druckraum 16 zugeordneten Ringfläche 36 größere Wirkfläche.

Die schnelle Verstellung der beweglichen Schließplatte 4 erfolgt über die drehfest mit der beweglichen Schließplatte 4 verbundene Spindel 6 mittels einer Spindelmutter 38, die axialfest, aber drehbar über Lager 40 in einem Gehäuse 42 aufgenommen ist. Die Spindelmutter 38 ist über einen Zahnriementrieb 44 von einem am Gehäuse 42 befestigten Elektromotor 46 angetrieben. Der Zylinder 8 ist in der nicht dargestellten festen Schließplatte angeordnet, die mit dem Gehäuse 42 verbunden ist. Die Schließeinheit 1 hat einen an der beweglichen Schließplatte 4 parallel zur Spindel 6 festgelegten Holm 48, der die Kolbeneinheit 10 axial durchsetzt. Die Kolbeneinheit 10 ist zum Aufbringen der großen Axialkraft über eine Halteeinrichtung 50 mit Bezug zu der beweglichen Schließplatte 4 festlegbar, wobei die Kolbeneinheit 10 in Radialrichtung, wie durch Pfeile angedeutet, in Eingriff mit dem Holm 48 bringbar ist, so dass die Axialkraft der hydraulischen Kolbeneinheit 10 nicht über die Spindel 6 sondern über den Holm 48 auf die bewegliche Schließplatte 4 wirkt (Spindel 6 entlastet). Hierzu hat die Halteeinrichtung 50 Eingriffsabschnitte 52, die formschlüssig in entsprechende Verriegelungsabschnitte eingreifen. Als besonders vorteilhaft hat es sich erwiesen, wenn die Eingriffs- und Verriegelungsabschnitte 52 eine Verzahnung bilden, die in Radialrichtung in Eingriff bringbar ist. Die Halteeinrichtung 50 ist derart ausgebildet, dass die Verriegelung der beweglichen Schließplatte 4 mit der Kolbeneinheit 10 an unterschiedlichen Axialpositionen erfolgen kann.

Bei einem nicht dargestellten Ausführungsbeispiel erfolgt die Verriegelung zwischen Holm 48 und Kolben 12 durch Reibschluss.

Im Folgenden wird die Funktion der Schließeinheit 1 anhand Figur 1 näher erläutert.

Die bewegliche Schließplatte 4 wird zum Schließen des Werkzeugs zunächst über den elektrischen Antrieb 46 bewegt (Eilgang). Da die dem rechten Druckraum 18 zugeordnete Wirkfläche 34 des Kolbens 12 größer als die dem linken Druckraum 16 zugeordnete Wirkfläche 36 ist und beide Druckräume 16, 18 in der Grundstellung mit dem Niederdruckspeicher 22 verbunden sind, befindet sich der Kolben 12 am linken Anschlag 54 des Zylinders 8. Die Halteeinrichtung 50 und das Wegeventil 32 sind geöffnet. Das Ventil 28 und damit die Verbindung zum Hochdruckspeicher 20 ist geschlossen. Die drehende Spindelmutter 38 bewegt die Spindel 6, die bewegliche Schließplatte 4 und den Holm 48 nach rechts in Figur 1. Kurz vor dem vollständigen Schließen des Werkzeugs 2 (Form) stoppt der Elektromotor kurz und der Kolben 12 wird mittels der Halteeinrichtung 50 mit dem Holm 48 formschlüssig verbunden. Anschließend wird das Werkzeug 2 bis zum Schließen des Werkzeugs 2 oder bis kurz vor dem Schließen des Werkzeugs 2 zugefahren, wobei die drehende Spindelmutter 38 über die Spindel 6, die bewegliche Schließplatte 4 und über den Holm 48 den Kolben 12 nach rechts bewegt, so dass das Differenzvolumen aus dem Volumen des rechten Druckraums 18 minus dem Volumen des linken Druckraums 16 in den Niederdruckspeicher 22 verdrängt wird. Kurz vor dem Schließen des Werkzeugs 2 wird das Ventil 32 geschlossen und das Ventil 28 geöffnet. Der Druck des Hochdruckspeichers 20 wirkt nun auf die Ringfläche 36 des Druckraums 16 und erzeugt eine vergleichsweise hohe, nach rechts gerichtete Schließkraft, die auf den Holm 48 übertragen und durch Drehen der Spindelmutter 38 mittels des Elektromotors 46 unterstützt wird. Das heißt, zum vollständigen Zufahren und Zuhalten des Werkzeugs 2 mit der erforderlichen hohen Schließkraft wird nur ein kurzer Resthub hydraulisch durchfahren, wobei die Axialkraft im Wesentlichen über den Holm 48 auf die bewegliche Schließplatte 4 übertragen wird.

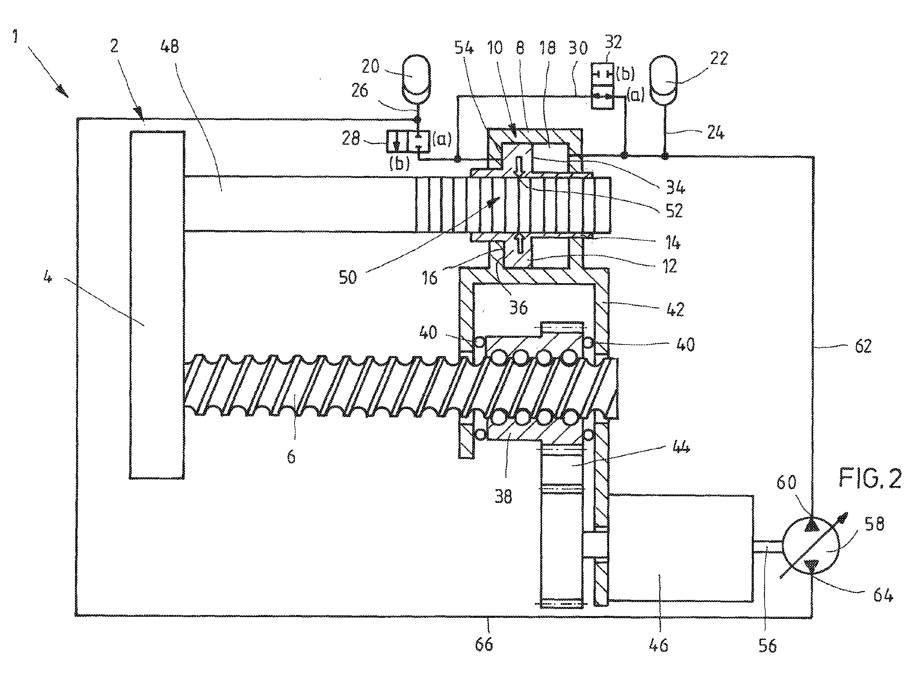

In Figur 2 ist ein Schaltschema einer alternativen Variante der Schließeinheit 1 gezeigt, die sich von der vorbeschriebenen Schließeinheit im Wesentlichen dadurch unterscheidet, dass der zum Spindelantrieb vorgesehene Elektromotor 46 über eine Abtriebswelle 56 mit einer Verstellpumpe 58 verbunden ist. Ein erster Anschluss 60 der Verstellpumpe 58 ist über eine Versorgungsleitung 62 mit dem Niederdruckspeicher 22 und ein zweiter Anschluss 64 über eine Druckleitung 66 und einen Teil der Hochdruckleitung 26 mit dem Hochdruckspeicher 20 verbunden, so dass die Hydrospeicher 20, 22 mittels der Hydropumpe 58 befüllbar und die beim Schließen auftretende Bremsenergie des Systems durch Rekuperation in hydraulische und/oder elektrische Energie umwandelbar ist. Dadurch kann der Gesamtwirkungsgrad des Systems verbessert werden.

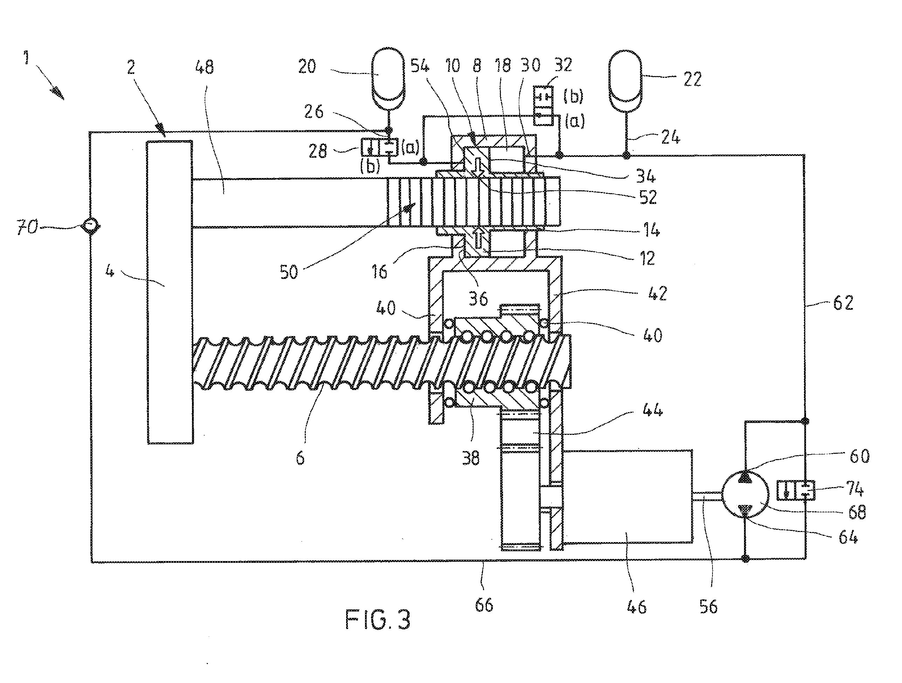

Gemäß Figur 3, die ein Schaltschema einer weiteren Variante der Schließeinheit 1 zeigt, kann die Hydropumpe als Konstantpumpe 68 ausgebildet sein, deren erster und zweiter Anschluss 60, 64 wiederum über Leitungen 62, 66 mit den Hydrospeichern 22, 20 verbunden ist. In der Leitung 66 ist ein in Richtung des Hochdruckspeichers 20 öffnendes Rückschlagventil 70 vorgesehen. Im Bypass zur Pumpe 68 ist zwischen den Leitungen 62, 66 ein 2/2-Wegeventil 74 angeordnet, so dass die Konstantpumpe 68 in ihrer Wirkung einstellbar ist.

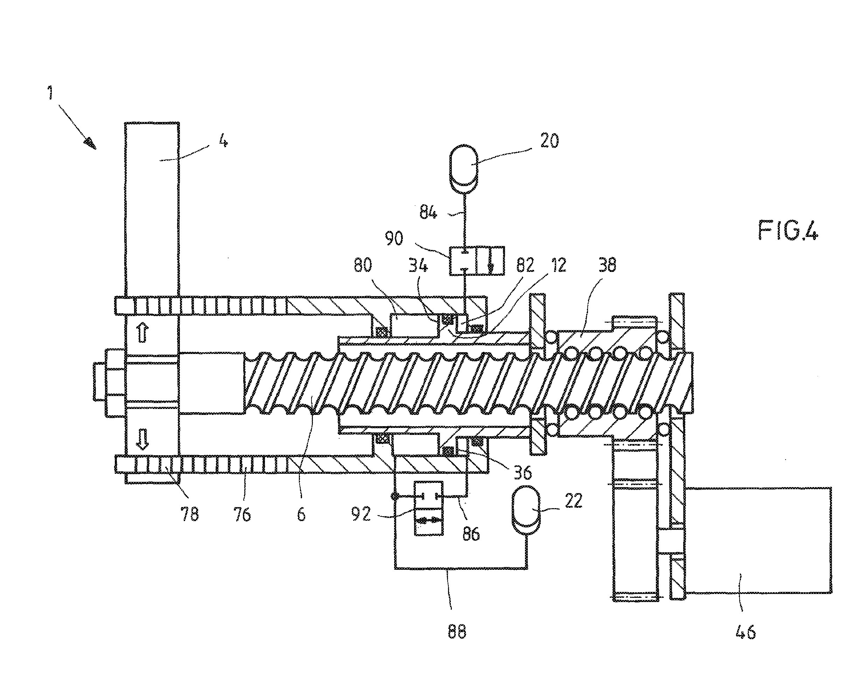

In Figur 4 ist ein Schaltschema einer Variante der Schließeinheit 1 gezeigt, die sich von der vorbeschriebenen Schließeinheit im Wesentlichen dadurch unterscheidet, dass die Spindel 6 den Kolben 12 axial durchsetzt, wobei die mit der Spindel 6 zusammenwirkende Spindelmutter 38 koaxial zu dem Kolben 10 angeordnet ist. Bei dieser Variante ist ein Zylinder 76 an der beweglichen Schließplatte 4 festlegbar und der Kolben 12 gehäusefest ausgebildet. Hierzu ist der Zylinder 76 in Richtung der beweglichen Schließplatte 4 verlängert und über eine radial verfahrbare Halteeinrichtung 78 mit dieser verbindbar. Der Kolben 12 begrenzt mit dem Zylinder 76 zwei Druckräume 80, 82, wobei der in Schließrichtung wirksame, rechte Druckraum 82 über eine Hochdruckleitung 84 mit dem Hochdruckspeicher 20 oder über eine Verbindungsleitung 86 und eine Niederdruckleitung 88 mit dem Niederdruckspeicher 22 verbindbar ist. Zur Steuerung der Kolbenbewegung ist in der Hochdruckleitung 84 und der Verbindungsleitung 86 jeweils ein 2/2-Wegeventil 90, 92 mit einer Offen- und einer Schließstellung angeordnet. Der in Öffnungsrichtung wirksame, linke Druckraum 80 des Zylinders 76 ist über einen Teil der Niederdruckleitung 88 und die Verbindungsleitung 86 mit Ventil 90 mit dem rechten Druckraum 82 verbindbar. Die dem linken Druckraum 80 des Zylinders 76 zugeordnete Ringfläche 34 des Kolbens 12 hat eine gegenüber einer dem rechten Druckraum 82 zugeordneten Ringfläche 36 größere Wirkfläche.

Im Folgenden wird die Funktion der Schließeinheit 1 gemäß Figur 4 näher erläutert.

Die bewegliche Schließplatte 4 wird zum Schließen des Werkzeugs 2 zunächst über den elektrischen Antrieb bewegt (Eilgang). Die Halteeinrichtung 78 und das Wegeventil 92 sind geöffnet. Das Ventil 90 ist geschlossen. Die dem linken Druckraum 80 zugeordnete Wirkfläche 34 des Kolbens 12 ist größer als die dem rechten Druckraum 82 zugeordnete Wirkfläche 36, so dass der rechte Druckraum 82 minimal ist. Die drehende Spindelmutter 38 zieht die Spindel 6 und die bewegliche Schließplatte 4 nach rechts in Figur 4. Kurz vor dem vollständigen Schließen des Werkzeugs 2 wird das Ventil 92 geschlossen und das Ventil 90 der Zylinder 76 mittels der Halteeinrichtung 78 mit der beweglichen Schließplatte 4 durch Formschluss verbunden. Anschließend wird das Werkzeug 2 bis zum Schließen des Werkzeugs 2 oder bis kurz vor dem Schließen des Werkzeugs 2 zugefahren, wobei die Spindel 6 und die bewegliche Schließplatte 4 den Zylinder 76 nach rechts bewegt, so dass sich das Volumen des linken Druckraumes 80 verkleinert und des rechten Druckraumes 82 vergrößert. Das Differenzvolumen aus dem Volumen des linken Druckraums 80 minus dem Volumen des rechten Druckraums 82 wird über die Verbindungsleitung 86, das geöffnete Wegeventil 92 und die Niederdruckleitung 88 in den Niederdruckspeicher 22 verdrängt. Kurz vor dem Schließen des Werkzeugs 2 wird das Ventil 92 geschlossen und das Ventil 90 geöffnet. Der Druck des Hochdruckspeichers 20 beaufschlagt über die Hochdruckleitung 84 den Druckraum 82 des Zylinders 8. Dieser wird in Figur 4 nach rechts bewegt und erzeugt über die Halteeinrichtung 78 eine hohe Schließ- und Zuhaltekraft der beweglichen Schließplatte 4, die durch Drehen der Spindelmutter 38 unterstützt wird.

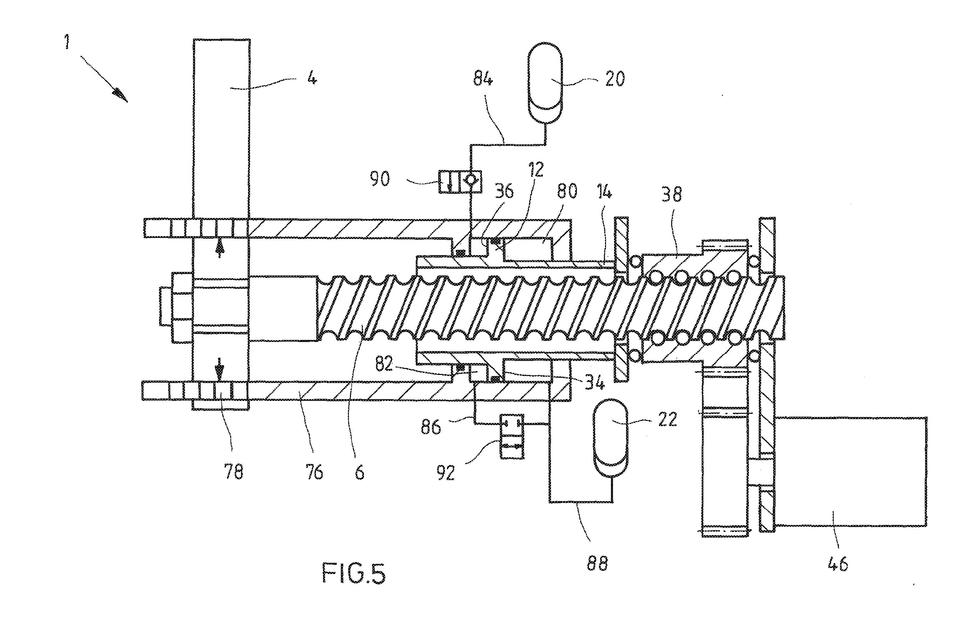

In Figur 5 ist ein Schaltschema einer alternativen Variante der Schließeinheit 1 aus Figur 4 gezeigt. Gegenüber der Schließeinheit nach Figur 4 sind gemäß Figur 5 Schließrichtung und Öffnungsrichtung vertauscht. Entsprechend sind auch die Druckräume und Ringflächen am Kolben 12 miteinander vertauscht. Der in Schließrichtung wirksame, nun linke Druckraum 82 ist über die Verbindungsleitung 86, das Ventil 92 und einen Teil der Niederdruckleitung 88 mit dem Niederdruckspeicher 22 verbindbar und der in Öffnungsrichtung wirksame, nun rechte Druckraum 80 ist über die Niederdruckleitung 88 mit dem Niederdruckspeicher 22 verbunden. Der linke Druckraum 82 ist bei dieser Variante über die Hochdruckleitung 84 und das Ventil 90 mit dem Hochdruckspeicher 20 verbindbar. Das Ventil 90 ist als Sitzventil ausgebildet, das in der dargestellten Arbeitsposition eine Druckmittelverbindung von dem Hochdruckspeicher 20 zu dem Druckraum 82 leckagefrei absperrt.

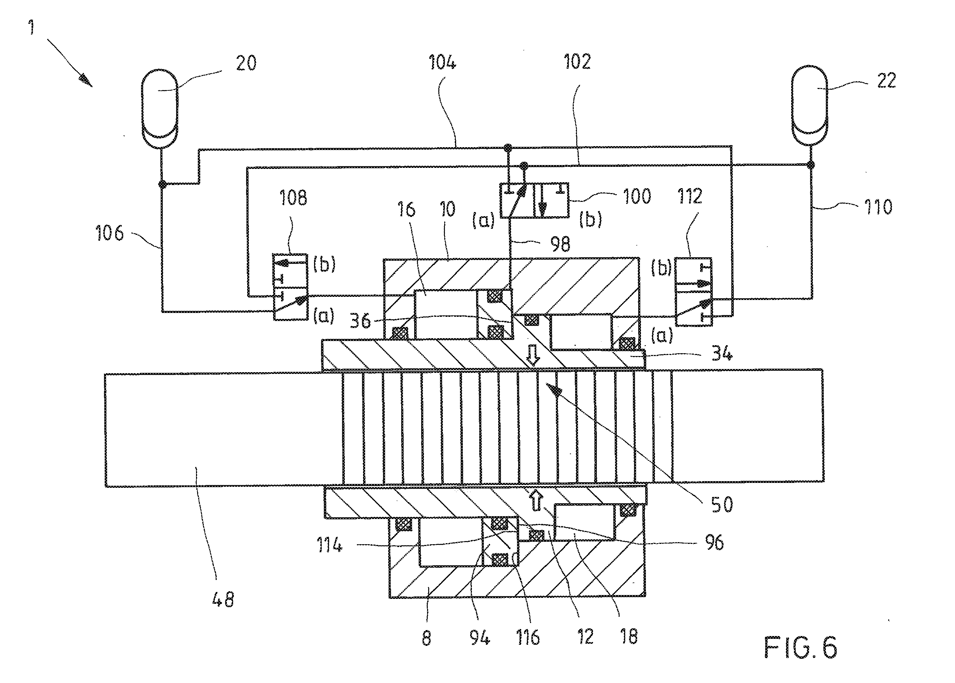

In Figur 6 ist ein Schaltschema einer weiteren Variante der Schließeinheit 1 gezeigt, die insbesondere für größere Maschinen geeignet ist, bei denen zum Öffnen des Werkzeugs 2 eine Aufreißkraft notwendig ist, die von der Spindel 6 (siehe Figur 1) nicht aufgebracht werden kann. Diese Variante unterscheidet sich von dem in Figur 1 gezeigten Ausführungsbeispiel im Wesentlichen dadurch, dass die Kolbeneinheit 10 zum Aufbringen der Aufreißkraft zwei Kolben 12, 94 mit unterschiedlichen Wirkflächen aufweist, die gemeinsam einen Teildruckraum 96 stirnseitig begrenzen (minimal in Figur 6). Der Teildruckraum 96 ist über eine Stichleitung 98 und ein 3/2-Wegeventil 100 in dessen einer Arbeitsposition (a) mit einer Niederdruckverbindungsleitung 102 oder in einer Arbeitsposition (b) des Wegeventils 100 mit einer Hochdruckverbindungsleitung 104 verbindbar. Die Hochdruckverbindungsleitung 104 steht über einen Teil einer Hochdruckleitung 106 mit dem Hochdruckspeicher 20 in Druckmittelverbindung. Die Hochdruckleitung 106 ist über ein 3/2-Wegeventil 108 in einer Arbeitsposition (a) mit dem linken Druckraum 16 des Zylinders 8 verbindbar. Über das 3/2-Wegeventil 108 steht in einer Arbeitsposition (b) weiterhin die Niederdruckverbindungsleitung 102 mit dem linken Druckraum 16 des Zylinders 8 in Druckmittelverbindung. In der Arbeitsposition (b) des Ventils 108 ist die Verbindung von dem Hochdruckspeicher 20 zu dem Druckraum 16 gesperrt. Die Niederdruckverbindungsleitung 102 ist über einen Teil einer Niederdruckleitung 110 mit dem Niederdruckspeicher 22 verbunden. Die Niederdruckleitung 110 ist über ein 3/2-Wegeventil 112 in einer Arbeitsposition (a) mit dem rechten Druckraum 18 des Zylinders 8 verbindbar. Über das 3/2-Wegeventil 112 steht in einer Arbeitsposition (b) weiterhin die Hochdruckverbindungsleitung 104 mit dem rechten Druckraum 18 des Zylinders 8 in Druckmittelverbindung. Der Kolben 94 mit größerer Wirkfläche ist somit in Richtung einer Anlageposition an den Kolben 12 mit kleinerer Wirkfläche mit Hochdruck oder Niederdruck beaufschlagbar und bildet einen beweglichen Anschlag aus. Der Kolben 12 mit kleinerer Wirkfläche ist zum Öffnen des Werkzeugs 2 (siehe Figur 1) mit Hochdruck beaufschlagbar. In der dargestellten Grundstellung der Schließeinheit 1 ist der große Kolben 94 mit Hochdruck beaufschlagt und über eine Anlagefläche 114 in Anlage an eine Stützfläche 116 des Zylinders 8 gebracht.

Im Folgenden wird die Funktion der Schließeinheit 1 gemäß Figur 6 näher erläutert.

Die bewegliche Schließplatte 4 wird zum Schließen des Werkzeugs 2 zunächst über den elektrischen Antrieb bewegt. Da die dem rechten Druckraum 18 zugeordnete Wirkfläche 34 des Kolbens 12 größer als die dem Teildruckraum 96 zugeordnete Wirkfläche und der Druckraum 16 und somit der große Kolben 94 mit Hochdruck beaufschlagt ist, befindet sich der kleine Kolben 12 in Anlage am großen Kolben 94. Die Halteeinrichtung 50 ist geöffnet, die Wegeventile 100, 108, 112 befinden sich jeweils in ihrer Arbeitsposition (a), der Holm 48 wird über die bewegliche Schließplatte 4 und die Spindel 6 (siehe Figur 1) gegenüber dem Kolben 12 axial nach rechts verschoben. Kurz vor dem vollständigen Schließen des Werkzeugs 2 wird der Kolben 12 mittels der Halteeinrichtung 50 mit dem Holm 48 formschlüssig verbunden. Anschließend wird das Werkzeug 2 bis zum Schließen des Werkzeugs 2 oder kurz vor dem Schließen des Werkzeugs 2 zugefahren, wobei die drehende Spindelmutter 38 (siehe Figur 1) über die Spindel 6 die bewegliche Schließplatte 4 und über den Holm 48 den Kolben 12 nach rechts bewegt, so dass das Differenzvolumen aus dem Volumen des rechten Druckraums 18 minus dem Volumen des Teildruckraumes 96 über die Niederdruckleitung 110 in den Niederdruckspeicher 22 verdrängt wird.

Kurz vor dem Schließen des Werkzeugs 2 wird das Wegeventil 100 in seine Arbeitsposition (b) betätigt, wobei der Teildruckraum 96 über die Hochdruckleitung 106, die Hochdruckverbindungsleitung 104 und die Stichleitung 98 mit Druckmittel aus dem Hochdruckspeicher 20 beaufschlagt wird. Da der größere Kolben 94 eine größere Wirkfläche aufweist, verbleibt dieser in seiner dargestellten Grundstellung, während der kleinere Kolben 12 und über diesen der Holm 48 und die bewegliche Schließplatte 4 nach rechts bewegt werden. Der Druck des Hochdruckspeichers 20 wirkt auf die Ringfläche 36 des Kolbens 12 und erzeugt über den Holm 48 eine hohe Schließkraft, die durch Drehen der Spindelmutter 38 unterstützt wird. Das Volumen des sich verkleinernden rechten Druckraumes 18 wird über die Niederdruckleitung 110 in den Niederdruckspeicher 22 verdrängt.

Anschließend wird das Wegeventil 100 wieder in seine Arbeitsstellung (a) betätigt, so dass der Teildruckraum 96 über die Niederdruckverbindungsleitung 102 und die Niederdruckleitung 110 mit dem Niederdruckspeicher 22 verbunden ist und das System entspannt wird.

Zum anschließenden Öffnen des Werkzeugs 2 wird ohne vorheriges Lösen des Formschlusses zwischen Holm 48 und Kolben 94 das Wegeventil 108 in seine Arbeitsposition (b) betätigt, so dass der linke Druckraum 16 über die Niederdruckverbindungsleitung 102 und einen Teil der Niederdruckleitung 110 mit dem Niederdruckspeicher 22 und mit dem Teildruckraum 96 verbunden ist. Der Teildruckraum 96 ist über die Stichleitung 98, die Niederdruckverbindungsleitung 102 und einen Teil der Niederdruckleitung 110 ebenfalls mit dem Niederdruckspeicher 22 verbunden. Das Wegeventil 112 wird in seine Arbeitsposition (b) betätigt, so dass der rechte Druckraum 18 über die Hochdruckverbindungsleitung 104 und einen Teil der Hochdruckleitung 106 mit dem Hochdruckspeicher 20 verbunden ist. Dadurch werden der kleine Kolben 12 und der Holm 48 und über diesen die bewegliche Schließplatte 4 mit vergleichsweise großer Kraft in Öffnungsrichtung der Schließplatte 4 bewegt (Aufreißen). Der Weg des Kolbens 12 kann dabei über die Stützfläche 116 des Zylinders 8 hinausgehen, da sich der große Kolben 94 gegen den Niederdruck verschieben läßt. Abschließend wird die Halteeinrichtung 50 gelöst und die Wegeventile 100, 108, 112 wieder in Ihre Arbeitsposition (a) betätigt, so dass die Kolbenanordnung 10 aufgrund der anliegenden Drücke wieder in ihre dargstellte Grundstellung gelangt.

Offenbart ist eine Schließeinheit 1 für ein Werkzeug 2 mit zwei relativ zueinander beweglichen Schließplatten 4 und einer in einem Zylinder 8, 76 angeordneten Kolbeneinheit 10 zum Aufbringen einer großen Schließkraft, wobei zumindest eine Schließplatte 4 mittels einer elektrisch angetriebenen Spindel 6 axial bewegbar ist. Erfindungsgemäß ist die Kolbeneinheit 10 oder der Zylinder 8, 76 zum Aufbringen der großen Axialkraft über eine Halteeinrichtung 50, 78 mit Bezug zu der beweglichen Schließplatte 4 festlegbar.

## Patentansprüche

1. Schließeinheit für ein Werkzeug (2), insbesondere ein Spritzgießwerkzeug, mit zwei relativ zueinander beweglichen Schließplatten (4) und einer in einem Zylinder (8, 76) angeordneten Kolbeneinheit (10) zum Aufbringen einer großen Schließkraft, wobei zumindest eine Schließplatte (4) mittels einer elektrisch angetriebenen Spindel (6) axial bewegbar ist, **dadurch gekennzeichnet, dass** die Kolbeneinheit (10) oder der Zylinder (8, 76) zum Aufbringen der großen Axialkraft über eine Halteeinrichtung (50, 78) mit Bezug zu der beweglichen Schließplatte (4) festlegbar ist.

2. Schließeinheit nach Anspruch 1, wobei die Halteeinrichtung (50, 78) Eingriffsabschnitte (52) hat, die formschlüssig in entsprechende Verriegelungsabschnitte eingreifen.

3. Schließeinheit nach Anspruch 1 oder 2, wobei die Eingriffs- und Verriegelungsabschnitte (52) eine Verzahnung bilden, die in Radialrichtung in Eingriff bringbar ist.

4. Schließeinheit nach einem der vorhergehenden Ansprüche, wobei die Halteeinrichtung (50, 78) derart ausgebildet ist, dass die Verriegelung an unterschiedlichen Axialpositionen erfolgen kann.

5. Schließeinheit nach einem der vorhergehenden Ansprüche, wobei die Kolbeneinheit (10) mit dem Zylinder (8) zwei Druckräume (16, 18; 80, 82) begrenzt, die jeweils mit einem Hochdruckspeicher (20) und/oder einem Niederdruckspeicher (22) verbindbar sind.

6. Schließeinheit nach einem der vorhergehenden Ansprüche, mit einem an der beweglichen Schließplatte (4) parallel zur Spindel (6) festgelegten Holm (48), der die Kolbeneinheit (10) durchsetzt, wobei die Kolbeneinheit (10) in Radialrichtung in Eingriff mit dem Holm (48) bringbar ist.

7. Schließeinheit nach einem der Ansprüche 1 bis 5, wobei die Spindel (6) die Kolbeneinheit (10) axial durchsetzt.

8. Schließeinheit nach Anspruch 7, wobei eine mit der Spindel (6) zusammenwirkende Spindelmutter (38) koaxial zu der Kolbeneinheit (10) angeordnet ist.

9. Schließeinheit nach Anspruch 7 oder 8, wobei der Zylinder (76) an der beweglichen Schließplatte (4) festlegbar ist.

10. Schließeinheit nach einem der vorhergehenden Ansprüche, wobei die Kolbeneinheit (10) zwei Kolben (12, 94) mit unterschiedlichen Wirkflächen aufweist, die gemeinsam einen Teildruckraum (96) stirnseitig begrenzen.

11. Schließeinheit nach Anspruch 10, wobei der Kolben (94) mit größerer Wirkfläche in Richtung einer Anlageposition an den Kolben (12) mit kleinerer Wirkfläche mit Hochdruck oder Niederdruck beaufschlagbar ist.

12. Schließeinheit nach Anspruch 10 oder 11, wobei der Kolben (12) mit kleinerer Wirkfläche mit Hochdruck in Schließ- und/oder Öffnungsrichtung beaufschlagbar ist.

13. Schließeinheit nach einem der vorhergehenden Ansprüche, wobei der Elektromotor (46) mit zumindest einer Pumpe (58, 68) und/oder einem Hydromotor verbunden ist.

14. Verfahren zum Schließen einer Schließeinheit (1) gemäß einem der vorhergehenden Ansprüche, mit den Schritten:
a) Verfahren der beweglichen Schließplatte (4) im Eilgang in Schließrichtung bei gelöster Halteeinrichtung (50, 78) mittels der elektrisch angetriebenen Spindel (6);
b) Festlegen der Kolbeneinheit (10) oder des Zylinders (8, 76) vor dem vollständigen Schließen des Werkzeugs (2) über die Halteeinrichtung (50, 78) mit Bezug zu der beweglichen Schließplatte (4);
c) Zufahren des Werkzeugs (2), wobei Druckmittel in den Niederdruckspeicher (22) verdrängt wird und
d) Druckbeaufschlagung der Kolbeneinheit (10) durch den Hochdruckspeicher (20) zum Aufbringen einer großen Schließkraft.
